# EUROPEAN PATENT APPLICATION

(11) **EP 4 012 845 A1**
(43) Date of publication of application: **15.06.2022**
(21) Application number: 20842665.0
(22) Date of filing: 13.11.2020
(51) Int. Cl.: H01R 13/62, H01R 24/66, H01R 24/76, H02J 7/00

(54) **ELECTRIC CONNECTION APPARATUS, EMERGENCY POWER SUPPLY, AND VEHICLE-MOUNTED ELECTRIC DEVICE**

(30) Priority: 15.10.2020 CN 202011103644
(71) Applicant: Shenzhen Juneng Vehicle Technology Co., Ltd., Shenzhen, Guangdong 518123 (CN)
(72) Inventor: DENG, Haiquan, Shenzhen, Guangdong 518123 (CN); CHEN, Longlin, Shenzhen, Guangdong 518123 (CN)
(74) Representative: Mohun, Stephen John
(86) International application number: PCT/CN2020/128590
(87) International publication number: WO 2022/077682

(57) **Abstract**

The present disclosure relates to an electrical connecting device, an emergency power supply, and the vehicle-mounted power-consuming device. The emergency power supply is electrically connected to the vehicle-mounted power-consuming device through the electrical connecting device. The magnetic attraction between the first magnet and the matching member can keep the spherical bump and the spherical groove in a matching state, such that the first conductive member is electrically connected to the second conductive member. The first conductive member and the second conductive member are in close contact by magnetic force, and thus the problems such as elastic fatigue will not occur. Moreover, the spherical bump is in spherical contact with the inner wall of the spherical groove, and thus the contact area therebetween is large. Moreover, even if the vibration is severe in a specific application scenario, causing the positions of the first conductive member and the second conductive member to be skewed, the contact area between the spherical bump and the spherical groove will not be significantly reduced, thereby ensuring the reliable contact. Therefore, the above-mentioned electrical connecting device significantly improves the reliability of the electrical connection between the emergency power supply and the vehicle-mounted power-consuming device.

## Description

### TECHNICAL FIELD

The present disclosure relates to a technical field of vehicle accessories, and in particular, to an electrical connecting device, an emergency power supply, and a vehicle-mounted power-consuming device.

### BACKGROUND

Power-consuming devices are usually electrically connected to power sources by means of sockets and plugs, and rely on elasticity of internal springs or elastic pieces to achieve a close contact between the plug and a conductive sheet in the socket. In some application scenarios, due to vibration and friction, a way of matching the socket and the plug is prone to looseness. Moreover, since a connecting object is in contact with a connected object by elastic force of the spring or the elastic piece, the connecting object and the connected object are in a state of physical elastic repulsion, which is easy to cause problems such as elastic fatigue, mechanical friction of a contact portion, and large contact internal resistance, leading to poor reliability of electrical connection.

### SUMMARY

Accordingly, in order to address the problem of the reliability of the electrical connection, it is necessary to provide an electrical connecting device, an emergency power supply, and a vehicle-mounted power-consuming device capable of improving the reliability of the electrical connection.

An electrical connecting device is configured to electrically connect a first device to a second device. The electrical connecting device includes:
a first conductive member and a first magnet provided on the first device;
a second conductive member and a matching member provided on the second device, and the matching member being capable of being magnetically attracted to the first magnet;
wherein one of the first conductive member and the second conductive member is provided with a spherical groove, the other one thereof is provided with a spherical bump matching the spherical groove. When the spherical bump is in contact with and matches an inner wall of the spherical groove, the first magnet is magnetically attracted to the matching member.

In one of the embodiments, the first magnet is a permanent magnet or an electromagnet.

In one of the embodiments, the matching member is a second magnet whose magnetic pole is opposite to a magnetic pole of the first magnet.

In one of the embodiments, a plurality of first magnets are provided. The first conductive member is located between the plurality of first magnets.

In one of the embodiments, the first conductive member and the second conductive member have a columnar shape. The spherical groove is provided at an end surface of the first conductive member. The spherical bump is provided at an end of the second conductive member.

In one of the embodiments, the electrical connecting device further includes a buffer spring sleeved on the second conductive member. When the spherical bump matches the spherical groove, the buffer spring abuts against an edge of the spherical groove.

In one of the embodiments, the first device and the second device are each provided with an abutting plane and a bearing plane. When the spherical bump is in contact with the inner wall of the spherical groove, the abutting plane abuts against the bearing plane.

In one of the embodiments, the electrical connecting device further includes a positioning hole provided on the abutting plane and a positioning protrusion provided on the bearing plane. When the spherical bump is in contact with and matches the inner wall of the spherical groove, the positioning protrusion is engaged in the positioning hole.

An emergency power supply is configured to supply power for a power-consuming device. The emergency power supply includes:
a power supply housing; and
the first conductive member and the first magnet of the electrical connecting device as described in any one of the above preferred embodiments.
wherein the first conductive member and the first magnet are provided on the power supply housing.

A vehicle-mounted power-consuming device includes:
a device body; and
the second conductive member and the matching member of the electrical connecting device as described in any one of the above preferred embodiments;
wherein the second conductive member and the matching member are provided on the device body.

The above-mentioned emergency power supply is electrically connected to the vehicle-mounted power-consuming device through the electrical connecting device. The magnetic attraction between the first magnet and the matching member can keep the spherical bump and the spherical groove in a matching state, such that the first conductive member is electrically connected to the second conductive member. The first conductive member and the second conductive member are in close contact by magnetic force, and thus the problems such as elastic fatigue will not occur. Moreover, the spherical bump is in spherical contact with the inner wall of the spherical groove, and thus the contact area therebetween is large. Moreover, even if the vibration is severe in a specific application scenario, causing the positions of the first conductive member and the second conductive member to be skewed, the contact area between the spherical bump and the spherical groove will not be significantly reduced, thereby ensuring the reliable contact. Therefore, the above-mentioned electrical connecting device significantly improves the reliability of the electrical connection between the emergency power supply and the vehicle-mounted power-consuming device.

### BRIEF DESCRIPTION OF THE DRAWINGS

To illustrate the technical solutions according to the embodiments of the present disclosure or prior art more clearly, the accompanying drawings for describing the embodiments or the prior art are introduced briefly in the following. Apparently, the accompanying drawings in the following description are only some embodiments of the present disclosure, and persons of ordinary skill in the art can derive other drawings from the accompanying drawings without creative efforts.
FIG. 1 is a schematic view of an emergency power supply and a vehicle-mounted power-consuming device in a cooperating state according to a preferred embodiment of the present disclosure.
FIG. 2 is an exploded view of the emergency power supply according to a preferred embodiment of the present disclosure.
FIG. 3 is a partial enlarged schematic view of a first conductive member of the emergency power supply shown in FIG. 2.
FIG. 4 is an exploded view of the emergency power supply shown in FIG. 2 from another aspect.
FIG. 5 is a schematic view of a vehicle-mounted power-consuming device according to a preferred embodiment of the present disclosure.
FIG. 6 is an exploded view of the vehicle-mounted power-consuming device shown in FIG. 5.
FIG. 7 is a partial enlarged schematic view of a second conductive member of the vehicle-mounted power-consuming device shown in FIG. 6.

### DETAILED DESCRIPTION OF THE EMBODIMENTS

In order to make the above objects, features and advantages of the present disclosure more obvious and understandable, the specific embodiments of the present disclosure will be illustrated in detail below in conjunctions with the accompanying drawings. In the following description, many specific details are set forth in order to assist readers in fully understanding the present disclosure. However, the present disclosure can be implemented in many other ways than described herein, and those skilled in the art can make similar improvements without departing from the connotation of the present disclosure. Therefore, the present disclosure is not limited by the specific embodiments disclosed below.

In the description of the present disclosure, it should be understood that orientation or positional relationships indicated by terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial" ,"radial", "circumferential", etc. are based on orientation or positional relationship shown in the drawings, which are merely to facilitate the description of the present disclosure and simplify the description, not to indicate or imply that the device or elements must have a particular orientation, be constructed and operated in a particular orientation, and therefore cannot be construed as a limitation on the present disclosure.

In addition, the terms "first" and "second" are used for description only, and cannot be understood as indicating or implying relative importance or implicitly indicating the number of technical features described. Thus, the features defined with "first" and "second" may include at least one of the features explicitly or implicitly. In the description of the present disclosure, the meaning of "plurality" is at least two, such as two, three, etc., unless explicitly defined otherwise.

In the present disclosure, unless explicitly specified and limited otherwise, the terms "mounting", "connecting", "connected", "fixed" and the like should be understood in a broad sense. For example, it may be a fixed connection or a detachable connection, or an integration, may be a mechanical connection or electrical connection, may be a direct connection, or may be an indirect connection through an intermediate medium, may be the connection between two elements or the interaction relationship between two elements, unless explicitly defined otherwise. The specific meanings of the above terms in the present disclosure can be understood by one of those ordinary skills in the art according to specific circumstances.

In the present disclosure, unless explicitly specified and limited otherwise, the first feature being "on" or "below" the second feature may be that the first and second features are in a direct contact, or the first and second features are in an indirectly contact through an intermediate medium. Moreover, the first feature being "over", "above" and "on" the second feature may be that the first feature is directly above or obliquely above the second feature, or simply means that the first feature is higher than the second feature in horizontal direction. The first feature being "beneath", "under", and "below" the second feature may be that the first feature is directly below or obliquely below the second feature, or simply means that the first feature is lower than the second feature in horizontal direction.

It should be noted that when an element is referred to as being "fixed" or "disposed on" another element, it may be directly on another element or there may also be an intermediate element therebetween. When an element is considered to be "connected" to another element, it may be directly connected to another element or there may be an intermediate element therebetween. As used herein, the terms "vertical", "horizontal", "upper", "lower", "left", "right", and similar expressions are for illustration only and are not meant to be the only embodiments.

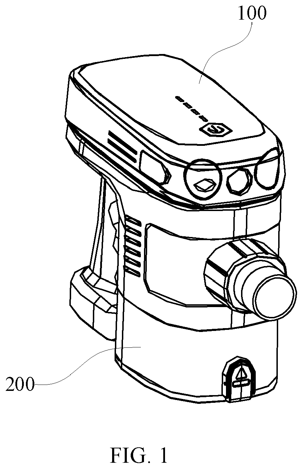

Referring to FIG. 1, the present disclosure provides an emergency power supply 100 and a vehicle-mounted power-consuming device 200. The emergency power supply 100 is used to supply power for a power-consuming device, such as the vehicle-mounted power-consuming device 200. In addition, the present disclosure also provides an electrical connecting device (not labeled), which is used to electrically connect a first device to a second device. Specifically, in this embodiment, the first device and the second device refer to the emergency power supply 100 and the vehicle-mounted power-consuming device 200, respectively. The electrical connecting device is used to electrically connect the emergency power supply 100 and the vehicle-mounted power-consuming device 200.

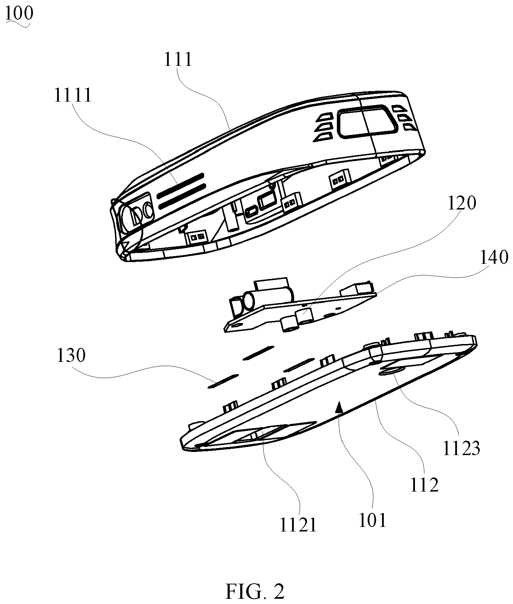

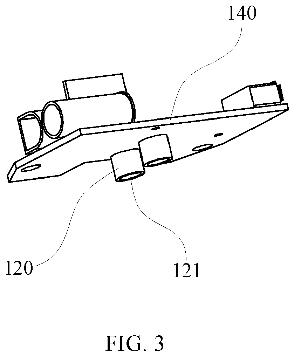

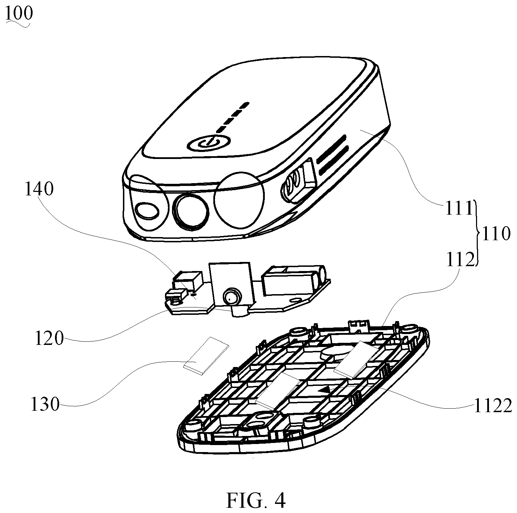

Referring to FIGS. 2 to 4, the emergency power supply 100 according to a preferred embodiment of the present disclosure includes a power supply housing 110, a first conductive member 120, and a first magnet 130.

The power supply housing 110 plays a role of accommodating, and is generally formed of materials such as resin or plastic. In order to implement basic functions, the emergency power supply 100 generally further includes other elements such as an energy storage element (not shown) and a circuit board 140, which can be accommodated in the power supply housing 110.

Specifically, in this embodiment, the power supply housing 110 includes an upper housing 111 and a bottom plate 112. One side of the upper housing 111 has an opening, and the bottom plate 112 can be mounted on an edge of an opening of the upper housing 111 and cover the opening of the upper housing 111. The upper housing 111 may be made of the same or different material as the bottom plate 112. The bottom plate 112 can be engaged with the upper housing 111 by a snap-fit, or it can be glued to the upper housing 111.

The upper housing 111 is generally of a hard shell structure formed of plastic or resin. In order to facilitate the removing and placing of the emergency power supply 100, specifically in this embodiment, a side wall of the upper housing 111 is provided with anti-slip ribs 1111. The anti-slip ribs 1111 can increase the friction when an operator holds the power supply housing 110.

The first conductive member 120 is provided on the power supply housing 110. The first conductive member 120 is used to lead out the electrical energy of the emergency power supply 100, thus the first conductive member 120 is generally formed of a good conductor such as copper, aluminum, or an alloy thereof. The first conductive member 120 may have a plate-shaped, sheet-shaped, or column-shaped structure. Specifically, in this embodiment, the bottom plate 112 is provided with an avoiding hole 1121. The first conductive member 120 is disposed opposite to the avoiding hole 1121.

Further, spherical grooves or spherical bumps are provided on the first conductive member 120. Specifically, in this embodiment, the first conductive member 120 has a columnar shape, and the spherical grooves 121 are provided on an end surface of the first conductive member 120. The spherical groove 121 means that its inner wall is a part of a spherical surface.

The first magnet 130 is provided on the power supply housing 110. The first magnet 130 may be a permanent magnet or an electromagnet. Specifically, in this embodiment, the first magnet 130 is a permanent magnet, such as neodymium iron boron magnet, samarium cobalt magnet or oxide magnet. The permanent magnet has the advantages of convenient mounting and low cost, which can reduce the cost of the emergency power supply 100.

When using the above emergency power supply 100, the power supply housing 110 can be attached to a metal shell of the power-consuming device. The power supply housing 110 can be attracted on the power-consuming device due to an attraction of the first magnet 130, thereby fixing the emergency power supply 100. Therefore, the operator's hands can be freed during the use of the emergency power supply 100, which is more convenient to use.

Specifically, in this embodiment, the first magnet 130 is mounted on the bottom plate 112. Therefore, when using the above-mentioned emergency power supply 100, the bottom plate 112 is generally attached to the power-consuming device, such that the magnetic force of the first magnet 130 is more easily transmitted to the power-consuming device.

In addition, the bottom plate 112 has a plate structure made of thermoplastic polyurethanes (TPU, thermoplastic polyurethane elastomer rubber) soft rubber. The bottom plate 112 made of soft rubber is soft in texture, such that the bottom plate 112 can avoid the wear of a housing of the power-consuming device. Moreover, a surface of the bottom plate 112 made of soft rubber has a relatively large friction factor, which can increase the friction between the power supply housing 110 and the power-consuming device. Therefore, even if there is a large vibration in the use environment, it will not cause the emergency power supply 100 to slip off from the power-consuming device.

More importantly, the TPU soft rubber has better flexibility. Compared with a conventional rigid plate structure, a thickness of the bottom plate 112 made of TPU soft rubber can be significantly reduced under the premise of ensuring that it is not easily damaged. As such, increased costs due to the use of larger flux magnets can be avoided.

Further, specifically in this embodiment, a plurality of first magnets 130 are provided, and positions of the plurality of first magnets 130 on the bottom plate 112 are adjustable.

Sizes and shapes of the power-consuming devices may vary greatly depending on the types or models thereof. By adjusting the distribution positions of the first magnets 130 on the bottom plate 112, the target position of the magnetic attraction force can be adjusted for different power-consuming devices, such that the emergency power supply 100 and the power-consuming device are more firmly attracted.

Furthermore, in this embodiment, a plurality of elastic engaging grooves 1122 are formed on an inner wall of the bottom plate 112. Each first magnet 130 can be received and engaged in any one of the elastic engaging grooves 1122.

The elastic engaging groove 1122 may be enclosed by crisscross ribs formed on the inner wall of the bottom plate 112. The ribs are integrally formed with the bottom plate 112, and are also made of TPU soft rubber material. Therefore, the engaging groove structure enclosed by the ribs is elastic, and has a length and a width flexibly changeable within a certain range. The elastic engaging groove 1122 can well limit and fix the first magnet 130. When the position of the first magnet 130 is required to be adjusted, the bottom plate 112 is firstly opened, the first magnet 130 is released 101 from one of the elastic engaging grooves 1122, and then is engaged into the other elastic engaging groove 1122.

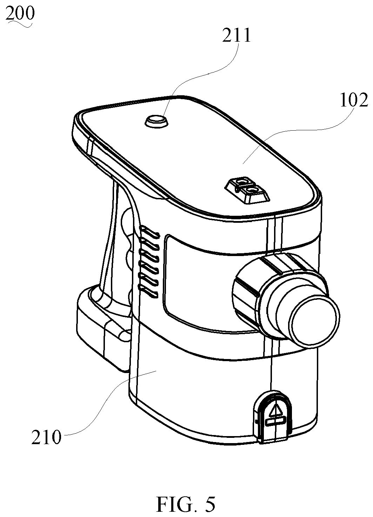

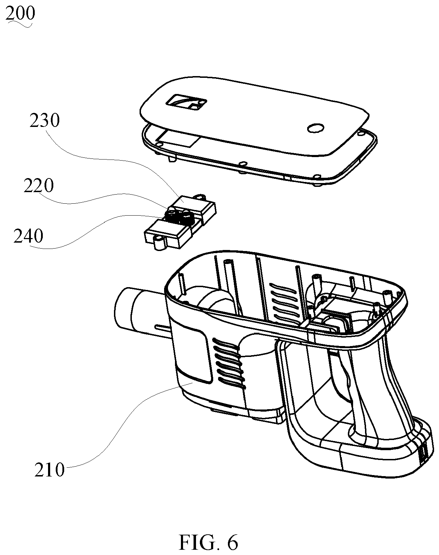

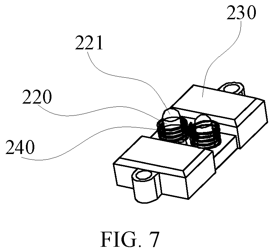

Referring to FIGS. 5 to 7, the vehicle-mounted power-consuming device 200 according to a preferred embodiment of the present disclosure includes a device body 210, a second conductive member 220, and a matching member 230.

The device body 210 varies according to the types of different power-consuming devices. In this embodiment, the vehicle-mounted power-consuming device 200 is a car vacuum cleaner. Therefore, the device body 210 is a vacuum cleaner body.

The second conductive element 220 is disposed on the device body 210 and has a similar structure to the first conductive element 120. The second conductive member 220 functions to introduce current for the device body 210, and thus the second conductive member 220 is also generally formed of a good conductor such as copper, aluminum, or an alloy thereof. Similarly, the second conductive member 220 may have a plate-like, sheet-like, or column-like structure.

Further, spherical grooves or spherical bumps are provided on the second conductive member 220. A structure provided on the second conductive member 220 is different from a structure provided on the first conductive member 120. That is, when the spherical grooves are provided on the first conductive member 120, the spherical bumps are provided on the second conductive member 220. When the spherical bumps are provided on the first conductive member 120, the spherical grooves are provided on the second conductive member 220.

Specifically, in this embodiment, the second conductive member 220 has a columnar shape, and the spherical bumps 221 are provided at an end of the second conductive member 220. The spherical bump 121 may be a complete sphere or a part of a sphere, such as a half sphere or a three-quarter sphere. The spherical bump 121 has a spherical outer surface, and has an outer diameter slightly less than an inner diameter of the spherical groove 121. Therefore, the spherical bump 121 can extend into the spherical groove 121 and be in a spherical contact with an inner wall of the spherical groove 121.

The matching member 230 is provided on the device body 210. The matching member 230 may be a metal with good magnetic permeability. For example, the matching member 230 may be a metal casing or a built-in metal bracket of the device body 210. In addition, the matching member 230 may also be a magnet with the same structure as the first magnet 130 and placed in the device body 210. Therefore, the matching member 230 can be magnetically attracted to the first magnet 130.

When using the emergency power supply 100 to supply power for the vehicle-mounted power-consuming device 200, the emergency power supply 100 can be attached to the vehicle-mounted power-consuming device 200 firstly. With the matching of the first magnet 130 and the matching member 230, the emergency power supply 100 will be attracted to the vehicle-mounted power-consuming device 200. Moreover, when the first magnet 130 is attracted to the matching member 230, the spherical bumps 221 is in contact with the inner wall of the spherical groove 121.

When the spherical bump 221 matches the spherical groove 121, the first conductive member 120 is electrically connected to the second conductive member 220, such that the emergency power supply 100 is electrically connected to the vehicle-mounted power-consuming device 200. The electric energy stored in the emergency power supply 100 can be transmitted to the vehicle power-consuming device 200 via the first conductive member 120 and the second conductive member 220.

The spherical bump 221 is in spherical contact with the inner wall of the spherical groove 121, and there is a large contact area therebetween. Moreover, since the contact surface between the spherical bump 221 and the spherical groove 121 is a curved surface instead of a flat surface, contact points therebetween are more three-dimensional, such that poor contact is less likely to occur, and thus the contact reliability is higher. Even if the vibration is severe in a specific application scenario, causing the positions of the first conductive member 120 and the second conductive member 220 to be skewed, the contact area between the spherical bump 221 and the spherical groove 121 will not be significantly reduced, thereby ensuring reliability contact.

In addition, through the magnetic attraction of the first magnet 130 and the matching member 230, the spherical bump 221 and the spherical groove 121 can always be kept in a matching state, such that the first conductive member 120 is electrically connected to the second conductive member 220. It can be seen that the first conductive member 120 and the second conductive member 220 are in close contact by magnetic force, and there is no elastic repulsion between the two, and thus the problems such as elastic fatigue will not occur. Therefore, the reliability of the electrical connection is significantly improved.

In this embodiment, the matching member 230 is a second magnet whose magnetic pole is opposite to that of the first magnet 220. That is, when the first magnet 220 matches the matching member 230, a south pole of the first magnet 220 faces a north pole of the second magnet. Alternatively, a north pole of the first magnet 220 faces a south pole of the second magnet.

Specifically, when two magnets with opposite magnetic poles are attracted to each other, magnetic central axes of the two magnets are coincident. Therefore, the positions of the matching member 230 and the first magnet 220 can be initially set, such that when the spherical bump 221 matches the inner wall of the spherical groove 121, the magnetic center axes of the two magnets are coincident.

When the emergency power supply 100 is electrically connected to the vehicle-mounted power-consuming device 200, once the matching member 230 approaches the first magnet 220, subjected to the magnetic force, there is a tendency to overlap the magnetic central axis of the matching member 230 with the magnetic central axis of the first magnet 220. As such, subjected to the magnetic force, the matching member 230 will eventually overlap with the first magnet 220, and the spherical bump 221 will eventually be aligned with the spherical groove 121. In other words, there is an automatic guiding and positioning in a process of matching the matching member 230 with the first magnet 220, which can automatically align the spherical bump 221 with the spherical groove 121, without manually aligning the first conductive member 120 and the second conductive member 220. Therefore, the convenience of operation is significantly improved.

Accordingly, the first conductive member 120, the first magnet 130, the second conductive member 220, and the matching member 230 constitute the above-mentioned electrical connecting device, which realizes the electrical connection between the emergency power supply 100 and the vehicle-mounted power-consuming device 200.

In this embodiment, the first device and the second device are each provided with an abutting plane 101 and a bearing plane 102. When the spherical bump 221 is in contact with the inner wall of the spherical groove 121, the abutting plane 101 abuts against the bearing plane 102.

Specifically, the first device and the second device in this embodiment refer to the emergency power supply 200 and the vehicle-mounted power-consuming device 200, respectively. That is, the abutting plane 101 and the bearing plane 102 are provided on the emergency power supply 200 and the vehicle-mounted power-consuming device 200, respectively. The abutting plane 101 can be located on an outer surface of the bottom plate 112, and the bearing plane 102 is located on an outer surface of the device body 210.

When the emergency power supply 100 is electrically connected to the vehicle-mounted power-consuming device 200, the abutting plane 101 abuts against the bearing plane 102, such that the emergency power supply 100 and the vehicle-mounted power-consuming device 200 are supported by a plane. Therefore, the support is more stable, and the emergency power supply 100 is prevented from shaking, warping, deflecting or the like during the electrical connection, thus ensuring the reliability of the electrical connection.

Further, in this embodiment, the electrical connecting device further includes a positioning hole 1123 provided on the abutting plane 101 and a positioning protrusion 211 provided on the bearing plane 102. When the spherical bump 221 is in contact with and matches the inner wall of the spherical groove 121, the positioning protrusion 211 is engaged in the positioning hole 1123.

Therefore, when the emergency power supply 100 is electrically connected to the vehicle-mounted power-consuming device 200, the positioning protrusion 211 matches the positioning hole 1123, which can further prevent the emergency power supply 100 from translating or swinging with respect to the device body 210, thereby further ensuring the reliability of the electrical connection.

In this embodiment, a plurality of first magnets 130 are provided, and the first conductive member 120 is located between the plurality of first magnets 130.

Specifically, three first magnets 130 may be provided and distributed in a triangular shape. Correspondingly, a plurality of matching members 230 are provided and correspond to the positions of the first magnets 130. Since the first conductive member 120 is located between the plurality of first magnets 130, when the first magnet 130 interacts with the matching member 230, applying points of the magnetic force are distributed along a circumferential direction of the first conductive member 120, such that the force applied on the first conductive member 120 and the second conductive member 220 is more stable, which contributes to improve the reliability of electrical connection between the first conductive member 120 and the second conductive member 220.

In this embodiment, the electrical connecting device further includes a buffer spring 240 sleeved on the second conductive member 220. When the spherical bump 221 matches the spherical groove 121, the buffer spring 240 abuts against an edge of the spherical groove 121.

Specifically, when the first conductive member 120 matches the second conductive member 220, the buffer spring 240 can prevent the spherical bump 221 from violently colliding with the inner wall of the spherical groove 121, thereby avoiding unnecessary wear. In addition, during use, the buffer spring 240 can further absorb kinetic energy generated by the vibration, thereby reducing the relative movement of the spherical bump 221 and the spherical groove 121, and further preventing the spherical bump 221 and the spherical groove 121 from being worn.

As described above, in this embodiment, the first magnet 130 is a permanent magnet. Apparently, in other embodiments, the first magnet 130 may also be an electromagnet.

The electromagnet includes an iron core and a coil. The coil can generate magnetic force when the coil is energized, and the magnetic force disappears when the power the coil is deenergized. When the emergency power supply 100 is supplying power, the coil is also energized, thereby achieving the attraction. After finishing using the emergency power supply 100, the coil is deenergized. In this case, the magnetic force of the first magnet 130 disappears, and the magnetic attraction cannot be realized, such that the emergency power supply 100 can be easily removed.

The above-mentioned emergency power supply 100 are electrically connected to the vehicle-mounted power-consuming device 200 through the electrical connecting device. The magnetic attraction between the first magnet 130 and the matching member 230 can keep the spherical bump 221 and the spherical groove 121 in a matching state, such that the first conductive member 120 is electrically connected to the second conductive member 220. The first conductive member 120 and the second conductive member 220 are in close contact by magnetic force, and thus the problems such as elastic fatigue will not occur. Moreover, the spherical bump 221 is in spherical contact with the inner wall of the spherical groove 121, and thus the contact area therebetween is large. Moreover, even if the vibration is severe in a specific application scenario, causing the positions of the first conductive member 120 and the second conductive member 220 to be skewed, the contact area between the spherical bump 221 and the spherical groove 121 will not be significantly reduced, thereby ensuring the reliable contact. Therefore, the above-mentioned electrical connecting device significantly improves the reliability of the electrical connection between the emergency power supply 100 and the vehicle-mounted power-consuming device 200.

The technical features of the above-mentioned embodiments can be combined arbitrarily. In order to simply the description, all possible combinations of the technical features in the above-mentioned embodiments are not described. However, as long as there is no contradiction in the combinations of these technical features, they should be considered to be fallen into the range described in the present specification.

Only several implementations of the present application are illustrated in the above-mentioned embodiments, and the description thereof is relatively specific and detailed, but it should not be understood as a limitation on the scope of the present application. It should be noted that for those of ordinary skill in the art, without departing from the concept of the present application, several modifications and improvements can be made, which all fall within the protection scope of the present application. Therefore, the protection scope of the present application shall be subject to the appended claims.

## Claims

1. An electrical connecting device configured to electrically connect a first device to a second device, the electrical connecting device comprising:
a first conductive member and a first magnet provided on the first device;
a second conductive member and a matching member provided on the second device, and the matching member being capable of being magnetically attracted to the first magnet;
wherein one of the first conductive member and the second conductive member is provided with a spherical groove, the other one thereof is provided with a spherical bump matching the spherical groove, and when the spherical bump is in contact with and matches an inner wall of the spherical groove, the first magnet is magnetically attracted to the matching member.

2. The electrical connecting device according to claim 1, wherein the first magnet is a permanent magnet or an electromagnet.

3. The electrical connecting device according to claim 1, wherein the matching member is a second magnet whose magnetic pole is opposite to a magnetic pole of the first magnet.

4. The electrical connecting device according to claim 1, wherein a plurality of first magnets are provided, and the first conductive member is located between the plurality of first magnets.

5. The electrical connecting device according to claim 1, wherein the first conductive member and the second conductive member have a columnar shape, the spherical groove is provided at an end surface of the first conductive member, and the spherical bump is provided at an end of the second conductive member.

6. The electrical connecting device according to claim 5, further comprising a buffer spring sleeved on the second conductive member, wherein when the spherical bump matches the spherical groove, the buffer spring abuts against an edge of the spherical groove.

7. The electrical connecting device according to claim 1, wherein the first device and the second device are each provided with an abutting plane and a bearing plane, and when the spherical bump is in contact with the inner wall of the spherical groove, the abutting plane abuts against the bearing plane.

8. The electrical connecting device according to claim 7, further comprising a positioning hole provided on the abutting plane and a positioning protrusion provided on the bearing plane, wherein when the spherical bump is in contact with and matches the inner wall of the spherical groove, the positioning protrusion is engaged in the positioning hole.

9. An emergency power supply configured to supply power for a power-consuming device, the emergency power supply comprising:
a power supply housing; and
the first conductive member and the first magnet of the electrical connecting device according to any one of claims 1 to 8;
wherein the first conductive member and the first magnet are provided on the power supply housing.

10. A vehicle-mounted power-consuming device, comprising:
a device body; and
the second conductive member and the matching member of the electrical connecting device according to any one of claims 1 to 8;
wherein the second conductive member and the matching member are provided on the device body.
